(19) **Europäisches Patentamt**

**European Patent Office**

**Office européen des brevets**

(11) Numéro de publication : **0 278 880 B1**

(12) **FASCICULE DE BREVET EUROPEEN**

(45) Date de publication du fascicule du brevet :
**18.09.91 Bulletin 91/38**

(51) Int. Cl.⁵ : **C09C 3/10, D21H 19/44, B01F 17/00**

(21) Numéro de dépôt : **88420037.9**

(22) Date de dépôt : **09.02.88**

(54) **Pré-traitement de matériaux minéraux grossiers en vue d'applications pigmentaires.**

(30) Priorité : **11.02.87 FR 8701897**

(43) Date de publication de la demande :
**17.08.88 Bulletin 88/33**

(45) Mention de la délivrance du brevet :
**18.09.91 Bulletin 91/38**

(84) Etats contractants désignés :
**AT BE DE ES GB IT NL SE**

(56) Documents cités :
**EP-A- 0 100 947**
**EP-A- 0 216 516**
**GB-A- 1 204 511**

(73) Titulaire : **Société COATEX, Société Anonyme**
**35 Cours Aristide Briand**
**F-69300 Caluire (FR)**

(72) Inventeur : **Ravet, Georges**
**Route Louis Pradel St Genis-Les-Ollières**
**F-69290 Craponne (FR)**
Inventeur : **Bonnet, Catherine**
**103, Boulevard de l'Europe**
**F-69310 Pierre-Bénite (FR)**
Inventeur : **Mongoin, Jacques**
**6, Place Colbert**
**F-69001 Lyon (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne le pré-traitement de matériaux minéraux grossiers contenant comme impuretés des argiles gonflantes, destinés à des applications pigmentaires sous forme de suspensions aqueuses ayant une teneur en matière sèche d'au moins 75% en poids, de rhéologie stable dans le temps et appropriée à chaque domaine d'application.

L'invention concerne également l'application nouvelle de l'agent de pré-traitement dans la préparation de suspensions de matériaux minéraux contenant comme impuretés des argiles gonflantes, suspensions destinées à subir des actions de délitage, d'attrition, de broyage, tout en ayant une teneur en matière sèche d'au moins 75% en poids et une rhéologie appropriée à chaque cas d'application.

Depuis longtemps déjà, il est connu d'utiliser des substances minérales telles que les carbonate, sulfate et silicate de calcium, ainsi que le dioxyde de titane, le talc, les kaolins pour la préparation de produits industriels destinés aux domaines des peintures, de l'enduction du papier, des charges pour caoutchoucs et résines synthétiques, etc...

Comme ces substances minérales ne possèdent pas toutes une structure naturelle lamellaire ou feuilletée facilitant leur délitage, comme c'est le cas de certaines substances telles que les silicates d'aluminium habituellement connus sous le nom de kaolin, l'homme de l'art doit, pour pouvoir les utiliser dans le domaine pigmentaire, les transformer par attrition et/ou broyage en une suspension aqueuse de grande finesse dont les grains constitutifs ont une dimension la plus faible possible, c'est-à-dire inférieure à quelques microns.

La littérature spécialisée a décrit l'importance et la complexité des techniques d'attrition ou de broyage en milieu aqueux de substances minérales pour obtenir une qualité partiellement affinée, autorisant une application pigmentaire. Ainsi, dans le cas particulier de l'enduction des papiers, il est bien connu que la masse d'enduction formée de pigments minéraux tels que les kaolins, le carbonate, le sulfate de calcium, ainsi que le dioxyde de titane mis en suspension dans l'eau contient également des agents liants et dispersants ainsi que d'autres adjuvants tels que des épaississants et des agents de coloration.

Or, il s'est révélé souhaitable, dans ces dernières années, de disposer pour le couchage du papier de suspensions pigmentaires ayant des teneurs en matières sèches les plus élevées possibles afin d'améliorer la stabilité dimensionnelle du papier, les conditions de séchage et, en particulier, les propriétés physiques de la couche déposée sur le substrat, telle que par exemple la brillance.

Pour atteindre l'objectif d'une teneur plus élevée en matière sèche dans les suspensions de pigments minéraux destinées au couchage, une première voie a été proposée, qui consistait à mettre en oeuvre des suspensions aqueuses de matériaux minéraux de granulométrie grossière.

Une telle suspension à granulométrie grossière est décrite par exemple dans le brevet britannique 1 204 511 et est réalisée en dispersant dans une phase aqueuse une craie blanche (chalk whiting) contenant 75% en poids de particules inférieures à 2 microns, à une concentration en matière sèche de 70 à 85% en poids en présence d'un agent dispersant qui est un sel sodique d'acide polyacrylique.

Pour aboutir à une craie blanche disposant de la granulométrie précitée, il est nécessaire d'effectuer un broyage par l'une ou l'autre des voies sèche ou humide.

Dans le cas où l'on pratique un broyage par voie sèche, les matériaux minéraux broyés doivent subir une sélection afin d'éliminer dans la mesure du possible toutes les particules ayant une dimension trop importante.

Dans le cas où l'on pratique un broyage par voie humide, la suspension résultant dudit broyage est naturellement limitée à une concentration en matière sèche au plus égale à 70% en poids à cause de l'augmentation constatée des viscosités. De ce fait, ladite suspension est par la suite soumise à un séchage partiel pour en augmenter la concentration en matière sèche, ou à un séchage total, dont l'inconvénient est de provoquer une réagglomération partielle des particules, obligeant l'homme de métier à pratiquer sur les matériaux minéraux séchés une sélection dimensionnelle.

Comme cette première voie pour atteindre une teneur plus élevée en matières sèches dans les suspensions de pigments minéraux destinées au couchage conduisait à des procédés longs, complexes et dès lors coûteux, une deuxième voie a été proposée pour atteindre ce but.

Cette deuxième voie consistait à mettre en oeuvre lors des opérations d'attrition ou de broyage par voie humide des agents de broyage de plus en plus élaborés facilitant l'opération de broyage, la dispersion des particules et le maintien des viscosités des suspensions à des valeurs acceptables.

Un premier type d'agent de broyage, décrit dans le brevet français 2 488 814, constitué par un polymère et/ou copolymère acrylique alcalin de viscosité spécifique moyenne inférieure à 0,8, est formé de la fraction isolée de ce polymère et/ou copolymère au moyen d'un solvant polaire ayant une viscosité spécifique comprise entre 0,3 et 0,8.

Si la vocation de ce type d'agent de broyage était essentiellement l'obtention d'une suspension pigmentaire de viscosité faible et stable dans le temps, cet agent a simultanément favorisé l'augmentation jusqu'à 76% en

2

poids de la teneur en matière sèche sans pouvoir dépasser ce seuil.

Un deuxième type d'agent dispersant, décrit dans le brevet français 2 387 911, se compose d'un sel de copolymères d'acides acrylique et maléïque de poids moléculaire moyen compris entre 2 000 et 10 000, permettant de réaliser des suspensions pigmentaires de carbonate de calcium ayant des taux de matières sèches compris seulement entre 40 et 60% en poids et ne pouvant pas dépasser la valeur supérieure.

Un troisième type d'agent de broyage, décrit dans le brevet français 2 531 444, est constitué par les polymères et/ou copolymères acryliques acides partiellement neutralisés par au moins un agent de neutralisation disposant d'au moins une fonction monovalente. Un tel agent de broyage a permis de stabiliser les propriétés rhéologiques des slurries dans le temps mais n'a pas permis d'augmenter la teneur en matière sèche de ces suspensions au-delà du seuil de 76% en poids.

Ainsi, l'art antérieur a préconisé, à travers la littérature spécialisée, de nombreux moyens à mettre en oeuvre au cours de l'opération de broyage des matériaux grossiers. Ces moyens, qui se proposaient d'augmenter la concentration en matière sèche des suspensions pigmentaires, d'abaisser simultanément la viscosité des suspensions au cours du broyage et enfin d'empêcher l'augmentation de la viscosité dans le temps, par exemple au cours du stockage, se sont révélés inefficaces. Car, si dans de nombreux cas ces moyens préconisés ont eu une manifestation favorable, il n'en a plus été de même, comme la Demanderesse a pu le constater, dès lors que les matériaux minéraux grossiers destinés à des applications pigmentaires contenaient des argiles gonflantes, même en très faible quantité. Dans ce cas, les moyens préconisés par l'art antérieur ont été inopérants à l'égard d'une augmentation, même faible, de la concentration en matières sèches des suspensions aqueuses soumises à une attrition ou à un broyage.

Plus que cela, les moyens préconisés ont souvent provoqué un accroissement simultané de la viscosité de ces suspensions, cet accroissement provoquant un affinage médiocre des matériaux minéraux, une manipulation difficile des suspensions pigmentaires dans leurs applications ultérieures et quelquefois une prise en masse des suspensions après leur broyage.

Forte des inconvénients précités, la Demanderesse, poursuivant ses recherches, a trouvé et mis au point une méthode de pré-traitement de matériaux minéraux grossiers qui annihile l'effet viscosifiant des argiles gonflantes présentes comme impuretés dans les suspensions aqueuses hautement concentrées en matériaux à affiner et destinées, après affinage, à des applications pigmentaires.

L'agent de pré-traitement des matériaux minéraux grossiers, pour les conditionner avant de les affiner en milieu aqueux par attrition ou broyage se caractérise en ce que, dans le but de produire des suspensions affinées pigmentaires de concentration au moins égale à 75% en poids et de viscosité faible et stable dans le temps, il est formé des polymères et/ou copolymères acides comportant au moins un monomère éthylénique carboxylé.

Ainsi, alors que l'art antérieur décrit pour l'essentiel des moyens s'appliquant au domaine du broyage ou de l'attrition des matériaux minéraux grossiers pratiquement dépourvus d'argiles gonflantes, le pré-traitement selon l'invention se distingue de l'art antérieur par le fait qu'il est mis en oeuvre, non pas dans l'étape de broyage, mais dans une étape précédant celle du broyage, que son action sur les matériaux minéraux grossiers à broyer consiste à les préparer, c'est-à-dire à les conditionner à subir l'étape de broyage ou d'attrition en les plaçant dans un état tel que la concentration en matière sèche des suspensions aqueuses soumises à l'étape du broyage ou d'attrition est fortement augmentée et que les suspensions de matériaux pigmentaires provenant de cette étape offrent une granulométrie pigmentaire adéquate et une viscosité des suspensions faible et stable dans le temps.

Plus que cela, l'agent de pré-traitement conditionnant les matériaux minéraux grossiers apparaît, comme la Demanderesse l'a constaté, être un mauvais agent de broyage quand il agit seul, puisque des suspensions de matériaux minéraux grossiers pré-traités au moyen dudit agent et soumises à l'étape du broyage en milieu aqueux en la seule présence dudit agent, même en qualité élevée, conduit à des suspensions mal broyées, voire impossibles à broyer, dont les caractéristiques de viscosité et de dimensions particulaires sont mauvaises.

Enfin, l'agent de pré-traitement dont l'action intervient selon l'invention, dans une étape de conditionnement des matériaux minéraux grossiers précédant celle du broyage ou de l'attrition, coopère pleinement avec l'agent de broyage appartenant à l'art connu, introduit dans l'étape du broyage en créant, grâce à leur présence simultanée, un état de synergie permettant l'obtention de suspensions pigmentaires affinées, hautement concentrées en matière sèche, de viscosités faibles et stables et dont les particules pigmentaires ont les dimensions souhaitées pour les applications.

Ainsi, il apparaît d'une manière surprenante que selon l'invention l'agent de pré-traitement n'est pas un agent de broyage et qu'il remplit pleinement sa fonction dans l'étape du broyage ou de l'attrition quand un agent de broyage classique lui est associé au cours dudit broyage ou de l'attrition.

L'agent de pré-traitement est constitué, comme cela a été antérieurement exprimé, par les polymères et/ou copolymères acides comportant au moins un monomère éthylénique carboxylé.

Parmi ces monomères mis en oeuvre dans le cadre de l'invention peuvent être cités l'acide acrylique et/ou méthacrylique, itaconique, crotonique, fumarique, anhydride maléïque ou encore isocrotonique, aconitique, mésaconique, sinapique, undécylénique, angélique, hydroxyacrylique, l'acroléïne, l'acrylamide et ses substitués, l'acrylonitrile, les esters des acides acryliques et méthacryliques et en particulier le méthacrylate de diméthylaminoéthyle, les imidazoles, vinylpyrolidone, vinylcaprolactame, l'éthylène, le propylène, l'isobutylène, le diisobutylène, l'acétate de vinyle, le styrène et ses substitués, l'alphaméthylstyrène, la méthylvinylcétone, les chlorures de vinyle, les monomères hydroxylés, plus spécialement les acrylates et les méthacrylates d'éthylène glycol, de propylène glycol ainsi que leurs dérivés phosphatés, sulfatés, sulfonés ou nitrés.

Ces polymères et/ou copolymères acides résultent de la polymérisation et/ou copolymérisation selon les procédés connus, en présence d'initiateurs et des régulateurs appropriés, en milieu aqueux, alcoolique, hydroalcoolique, aromatique ou aliphatique de l'un au moins des monomères éthyléniques carboxylés précités.

Ainsi, le milieu de polymérisation peut être l'eau, le méthanol, l'éthanol, le propanol, l'isopropanol, les butanols, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, le chlorure de méthyle, les éthers de monopropylèneglycol, diéthylèneglycol.

Les polymères et/ou copolymères destinés à être utilisés selon l'invention comme agent de pré-traitement sont généralement choisis parmis ceux ayant un poids moléculaire compris entre 1 000 et 8 000 et préférentiellement entre 3 000 et 6 000.

Dès la fin de la polymérisation, les polymères et/ou copolymères acides en solution aqueuse sont recueillis et peuvent être mis en oeuvre sous cette forme.

Selon une variante qui s'est révélée être intéressante, les polymères et/ou copolymères en solution aqueuse peuvent être partiellement neutralisés par un agent de neutralisation disposant d'une fonction monovalente et/ou une fonction polyvalente.

Dans ce cas, l'agent de neutralisation est souhaitablement choisi dans le groupe constitué par les cations alcalins, en particulier le sodium et le potassium, et/ou le groupe des alcalino-terreux ou assimilés, préférentiellement le calcium et le magnésium.

Dans le cas d'une neutralisation partielle des sites actifs des polymères et/ou copolymères, le taux de neutralisation est au plus égal à 0,40 et préférentiellement au plus égal à 0,20.

En pratique, la phase liquide résultant de la polymérisation et/ou copolymérisation et contenant les polymères et/ou copolymères acides peut être utilisée sous cette forme comme agent de pré-traitement des substances minérales grossières à affiner ultérieurement, mais elle peut également être traitée par tous moyens connus pour en éliminer cette phase et isoler les polymères et/ou copolymères acides sous la forme d'une fine poudre qui peut être utilisée sous cette autre forme comme agent de pré-traitement.

Dans une plus large perspective, l'agent de pré-traitement peut être mis en oeuvre selon la méthode selon l'invention comportant les étapes de réalisation suivantes :

a) on réalise sous agitation une imprégnation quasiment à sec des matériaux minéraux grossiers au moyen de l'agent de pré-traitement,

b) on introduit éventuellement dans le milieu imprégné (a) une petite quantité d'eau représentant au plus 25% en poids par rapport à la masse à l'état sec des matériaux minéraux grossiers,

c) on malaxe le milieu d'imprégnation jusqu'à l'obtention d'un état de pâte visqueuse et/ou d'un état de particules granulaires,

d) on traite le milieu provenant de l'étape (c) par une solution aqueuse d'un hydroxyde jusqu'à l'obtention d'un pH d'environ 9,

e) on recueille une suspension aqueuse fluide.

Selon l'invention l'agent de pré-traitement est introduit dans l'étage (a) à raison de 0,05 à 1,0% en poids de matières actives par rapport au poids sec des matériaux minéraux grossiers à conditionner.

La suspension recueillie à l'issue de l'étape (e) a généralement une concentration en matière sèche d'au moins 75% et préférentiellement comprise dans l'intervalle de 75% à 85% en poids.

Pour régler la concentration de la suspension aqueuse fluide recueillie dans l'étape (e) dans l'intervalle de 75% à 85% en poids de matières sèches, il peut être souhaitable d'introduire selon l'étape (b) une quantité d'eau adéquate, au plus 25% en poids.

A l'issue du conditionnement selon l'invention des matériaux minéraux grossiers par l'agent de pré-traitement, la suspension aqueuse fluide provenant de l'étape (e) peut être soumise à une opération de broyage ou d'attrition en phase aqueuse selon les moyens connus, en présence d'un agent de broyage de type connu.

Selon l'invention l'agent de pré-traitement destiné à conditionner avant attrition ou broyage des matériaux grossiers contenant des argiles gonflantes s'applique à des matériaux aussi divers, tels que par exemple les carbonate, hydroxyde, sulfate et silicate de calcium, le dioxyde de titane, le talc, les kaolins, les barbotines de céramiques, les minerais argileux dont un élément métallique est à valoriser par hydro-métallurgie.

La portée et l'intérêt de l'invention seront mieux perçus grâce aux exemples illustratifs et comparatifs à l'égard de l'art antérieur.

### Exemple 1

Cet exemple, dont le but est d'illustrer l'art connu, concerne la préparation d'une suspension de matériaux minéraux grossiers destinée à être soumise à un broyage pour l'affiner en une suspension pigmentaire.

Dans ce but, plusieurs essais ont été réalisés, les uns faisant usage de carbonate de calcium provenant du gisement de calcite d'Orgon (France) contenant 0,07% en poids d'argiles gonflantes, les autres faisant usage de carbonate de calcium provenant du gisement de craie d'Omey (France) contenant 1,1% en poids d'argiles gonflantes.

Un premier groupe d'essais (essais 1 à 5) concerne la préparation et le broyage d'une suspension de carbonate de calcium en présence d'un polyacrylate de sodium de poids moléculaire moyen 4 000 selon le brevet français 2 488 814.

Un deuxième groupe d'essais (essais 6 à 11) concerne la préparation d'une suspension de carbonate de calcium en présence d'un polyacrylate mixte de sodium et de calcium (dans le rapport Na : 0,7 et Ca : 0,3) de poids moléculaire moyen 4 000.

Ces essais ont été exécutés selon les mêmes critères expérimentaux en effectuant le broyage dans le même appareillage afin que les résultats obtenus puissent être comparés.

Pour chaque essai, on a préparé une suspension aqueuse de carbonate de calcium provenant d'un des gisements précités, ayant une granulométrie inférieure à 43 microns.

La suspension aqueuse avait une concentration variable en matière sèche exprimée en pour cent en poids par rapport à la masse totale, selon les quantités indiquées dans les tableaux ci-après.

L'agent de broyage était introduit dans cette suspension selon les quantités indiquées dans les tableaux ci-après, exprimées en pour cent en poids par rapport à la masse de carbonate de calcium à broyer.

La suspension ainsi préparée était placée dans un broyeur du type Dyno-Mill à cylindre fixe et impulseur tournant, dont le corps broyant était constitué par des billes de corindon de diamètre compris dans l'intervalle 0,5 millimètre à 2,0 millimètres.

Le volume total occupé par le corps broyant était de 1 200 centimètres cube tandis que sa masse était de 2 900 grammes.

La chambre de broyage avait un volume de 2 500 centimètres cube.

La vitesse circonférentielle du broyeur était de 10 mètres par seconde.

La suspension de carbonate de calcium était recyclée à raison de 18 litres par heure.

La sortie du broyeur Dyno-Mill était munie d'un séparateur de mailles 300 microns, permettant de séparer la suspension résultant du broyage et le corps broyant.

La température lors de chaque essai de broyage était maintenue à 65° C.

Le temps de broyage dans les conditions d'expérimentation précitées était variable entre 5 et 70 minutes quand le broyage était possible.

A la fin du broyage, la viscosité de la suspension pigmentaire était mesurée à l'aide d'un viscosimètre Brookfield, à une température de 20° C et une vitesse de rotation de 100 tours par minute. Après un temps de repos de 24 heures, la viscosité de chaque suspension était à nouveau mesurée après une brève agitation.

De même, à la fin du broyage, la granulométrie était déterminée par l'intermédiaire d'un Sédigraph type Micromeritics 5 000.

Tous les résultats expérimentaux relatifs aux essais 1 à 5 sont regroupés dans le tableau I et ceux concernant les essais 6 à 11 le sont dans le tableau II.

## TABLEAU I

| MATERIAUX MINERAUX | ESSAIS N° | 1 | 2 | 3 | 4 | 5 |
|---|---|---|---|---|---|---|
| | TYPE | Calcite | Calcite | Calcite | Craie | Craie |
| **B R O Y A G E** | Suspension | | | | | |
| | – pH | 9,3 | 9,4 | 9,3 | 9,5 | 9,4 |
| | – Concentration en poids | 76 | 78 | 80 | 76 | 80 |
| | – Viscosité Brookfield 20°C 100T/mn | 200 | 265 | 280 | 490 | 2100 |
| | Agent de broyage – Type | Poly acrylate | Poly acrylate | Poly acrylate | Poly acrylate | Poly acrylate |
| | – Poids moléculaire | 4000 | 4000 | 4000 | 4000 | 4000 |
| | – Agent de neutralisation | Sodium | Sodium | Sodium | Sodium | Sodium |
| | – Taux de neutralisation | 1 | 1 | 1 | 1 | 1 |
| | – Consommation % sec/sec | 1,1 | 1,5 | 1,5 | 0,9 | 1,5 |
| | Température de broyage °C | 65 | 65 | 65 | 65 | 65 |
| | Concentration de la suspension sortie broyage en % en poids | 76 | 78 | 80 | 76 | 80 |
| **SUSPENSIONS APRES BROYAGE** | Temps de broyage en mn | 70 | 28 | 12 | 50 | **IMPOSSIBLE BROYAGE** |
| | Viscosité Brookfield 20°C 100 T/mn | | | | | |
| | – Après broyage | 850 | 1100 | 700 | 730 | |
| | – Après 24 h de repos | 1280 | 1800 | 900 | 860 | |
| | Granulométrie | | | | | |
| | – en % inférieur à 2 $\mu$ | 94 | 80 | 66 | 97 | |
| | – en % inférieur à 1 $\mu$ | 75 | 50 | 40 | 80 | |

TABLEAU II

| MATERIAUX MINERAUX | ESSAIS N° | 6 | 7 | 8 | 9 | 10 | 11 |
|---|---|---|---|---|---|---|---|
| | TYPE | Calcite | Calcite | Calcite | Craie | Craie | Craie |
| | **Suspension** | | | | | | |
| | – pH | 9,4 | 9,3 | 9,5 | 9,4 | 9,5 | 9,3 |
| | – Concentration en poids | 76 | 78 | 80 | 76 | 78 | 80 |
| | – Viscosité Brookfield 20°C 100T/mn | 250 | 280 | 440 | 700 | 1520 | 5300 |
| B R O Y A G E | **Agent de broyage** – Type | Poly acrylate | Poly acrylate | Poly acrylate | Poly acrylate | Poly acrylate | Poly acrylate |
| | – Poids moléculaire | 4000 | 4000 | 4000 | 4000 | 4000 | 4000 |
| | – Agent de neutralisation | Na+/Ca2+ | Na+/Ca2+ | Na+/Ca2+ | Na+/Ca2+ | Na+/Ca2+ | Na+/Ca2+ |
| | – Taux de neutralisation | 0,7/0,3 | 0,7/0,3 | 0,7/0,3 | 0,7/0,3 | 0,7/0,3 | 0,7/0,3 |
| | – Consommation % sec/sec | 1,15 | 1,5 | 1,5 | 1 | 1,5 | 1,5 |
| | Température de broyage °C | 65 | 65 | 65 | 65 | 65 | 65 |
| | Concentration de la suspension sortie broyage en % en poids | 76 | 78 | 80 | 76 | 78 | 80 |
| | Temps de broyage en mn | 70 | | | 52 | | |
| S U S P E N S I O N S  A P R E S  B R O Y A G E | Viscosité Brookfield 20°C 100 T/mn | | IMPOSSIBLE BROYAGE | IMPOSSIBLE BROYAGE | | IMPOSSIBLE BROYAGE | IMPOSSIBLE BROYAGE |
| | – Après broyage | 350 | | | 720 | | |
| | – Après 24 h de repos | 320 | | | 780 | | |
| | Granulométrie | | | | | | |
| | – en % inférieur à 2 µ | 95 | | | 98 | | |
| | – en % inférieur à 1 µ | 75 | | | 79 | | |

Les tableaux I et II révèlent qu'en pratiquant l'art antérieur décrit, il est irréaliste de pouvoir obtenir des suspensions de carbonate de calcium ayant simultanément une concentration supérieure à 76% en poids, une granulométrie telle qu'au moins 55% des particules ont une dimension inférieure à 1 micron et une viscosité suffisamment faible (au plus égale à 2 000 cP immédiatement après broyage) pour que ladite suspension soit manipulable.

## Exemple 2

Cet exemple, destiné à illustrer l'objet de l'invention, concerne le pré-traitement des mêmes types de carbonate de calcium utilisés dans l'exemple 1 et destinés après le pré-traitement selon l'invention à subir une opération de broyage.

Pour ce faire, plusieurs essais ont été effectués, faisant usage, dans la majorité des cas de "craies" provenant du gisement d'Omey (France) contenant 1,1% en poids d'argiles gonflantes.

L'essai 12 concerne le pré-traitement selon l'invention d'une calcite (en provenance du gisement d'Orgon) au moyen d'un acide polyacrylique, dont les caractéristiques sont énumérées dans le tableau III colonne 12.

L'essai 13 concerne le pré-traitement d'une craie d'Omey au moyen du même agent que dans l'essai 12.

Les essais 14 et 15 concernent le pré-traitement de la même craie que dans l'essai 13 par application d'un agent de pré-traitement qui est le même acide polyacrylique que pour les essais 12 et 13, mais dont 20% des groupes carboxyliques ont été préalablement neutralisés par de l'hydroxyde de sodium (essai 14) et neutralisés complètement par de l'hydroxyde de potassium (essai 15).

Ces divers essais ont été exécutés selon les mêmes critères et dans les mêmes appareils (spécifiques à chaque étape) afin que les résultats obtenus soient comparables.

Dans une première étape, dite étape de pré-traitement, les matériaux minéraux grossiers (carbonate de calcium de granulométrie comprise entre 5 et 43 microns) ont été introduits dans un malaxeur maintenu sous une agitation permanente. Puis selon l'invention a été ajouté l'agent de pré-traitement (acide polyacrylique) préalablement dilué au moyen de la quantité d'eau nécessaire pour obtenir la concentration souhaitée pour la suspension destinée à subir un broyage.

Après un temps suffisamment long pour que le mélange constitué par les matériaux minéraux grossiers et l'agent de pré-traitement soit homogène, un agent alcalin de neutralisation a été introduit en une quantité telle que le pH du mélange atteigne une valeur comprise entre 9 et 10.

Au fur et à mesure que la neutralisation s'effectuait, le mélange est passé d'un état pâteux à un état très fluide.

Dans une deuxième étape, chaque suspension aqueuse ayant subi le pré-traitement selon l'invention a été placée dans le même appareil de broyage que dans l'exemple 1 avec la même quantité et le même type de corps broyants et a été traitée selon les mêmes critères expérimentaux que dans l'exemple 1 afin que les résultats obtenus puissent être comparés.

Chaque suspension aqueuse pré-traitée et soumise à l'opération de broyage avait une concentration de matériaux minéraux de 80% en poids.

Un agent de broyage appartenant à l'art antérieur était introduit dans chaque suspension à broyer selon les quantités indiquées dans le tableau III ci-après, exprimées en pour cent en poids (sec/sec) par rapport à la masse de matériaux minéraux à broyer, puis le mélange a été soumis à un broyage.

Tous les résultats obtenus sur les suspensions soumises au pré-traitement selon l'invention puis broyées sont consignés dans le tableau III ci-après.

## TABLEAU III

| MATERIAUX MINERAUX | ESSAIS N° | 12 | 13 | 14 | 15 |
|---|---|---|---|---|---|
| | TYPE | Calcite | Craie | Craie | Craie |
| **P R E T R A I T E M E N T** | Agent de pré-traitement — Type | Acide Poly acrylique | Acide Poly acrylique | Acide Poly acrylique neutralisé 20 % Soude | Acide Poly acrylique |
| | – Poids moléculaire | 4000 | 4000 | 4000 | 4000 |
| | – Consommation % sec/sec | 0,6 | 0,4 | 0,4 | 0,6 |
| | Agent de neutralisation — Type | Sodium | Sodium | Sodium | Potasse |
| | – Consommation | 0,3 | 0,2 | 0,16 | 0,3 |
| | Suspension — pH | 9,6 | 9,8 | 9,7 | 9,6 |
| | – Concentration en poids | 80 | 80 | 80 | 80 |
| | – Viscosité Brookfield 20°C 100T/mn | 325 | 685 | 620 | 750 |
| **B R O Y A G E** | Agent de broyage — Type | Poly acrylate | Poly acrylate | Poly acrylate | Poly acrylate |
| | – Poids moléculaire | 4000 | 4000 | 4000 | 4000 |
| | – Agent de neutralisation | Sodium | Sodium | Sodium | Sodium |
| | – Taux de neutralisation | 1 | 1 | 1 | 1 |
| | – Consommation % sec/sec | 0,6 | 0,9 | 0,9 | 0,6 |
| | Température de broyage °C | 65 | 65 | 65 | 65 |
| | Concentration de la suspension sortie broyage en % en poids | 80 | 80 | 80 | 80 |
| | Temps de broyage en mn | 24 | 12 | 8 | 10 |
| **SUSPENSIONS APRES BROYAGE** | Viscosité Brookfield 20°C 100 T/mn | | | | |
| | – Après broyage | 800 | 1100 | 1050 | 1200 |
| | – Après 24 h de repos | 1140 | 2630 | 2500 | 2700 |
| | Granulométrie — en % inférieur à 2 μ | 87 | 89 | 80 | 82 |
| | – en % inférieur à 1 μ | 54 | 55 | 48 | 50 |

Ce tableau révèle, par comparaison avec les tableaux de l'exemple 1, l'importante augmentation de la concentration des suspensions (80% en poids) provenant d'une opération de broyage quand les matériaux minéraux à broyer ont subi un pré-traitement selon l'invention au moyen de l'agent.

Ce tableau révèle également que, malgré l'augmentation de la concentration de chaque suspension en matériaux minéraux, la granulométrie est excellente pour les applications pigmentaires auxquelles ces matériaux affinés sont destinés.

Ce tableau révèle enfin que, malgré une haute concentration en matériaux minéraux, les suspensions provenant d'une opération de broyage, après que lesdits matériaux minéraux aient subi le pré-traitement selon l'invention, disposent d'une viscosité suffisamment faible pour être manipulable, alors que les suspensions provenant du broyage sans avoir bénéficié du pré-traitement sont inutilisables en raison de leur viscosité très élevée.

## Exemple 3

Cet exemple, qui illustre l'objet de l'invention, concerne le pré-traitement des mêmes types de carbonate de calcium utilisés dans l'exemple 1 au moyen de l'agent de pré-traitement, dont les poids moléculaires ont été choisis dans l'intervalle de sélection.

Dans ce but, plusieurs essais ont été effectués, mettant en oeuvre des "craies" provenant du gisement d'Omey (France) contenant 1,1% en poids d'argiles gonflantes.

L'essai 16 concerne le pré-traitement de "craie" par l'intermédiaire d'un acide polyacrylique de poids moléculaire moyen égal à 1 000.

L'essai 17 concerne le pré-traitement de "craie" avec un acide polyacrylique de poids moléculaire moyen égal à 8 000.

L'essai 18 est relatif au pré-traitement de "craie" au moyen d'un acide polyacrylique de poids moléculaire égal à 20 000, montrant les limites de l'intervalle de sélection des poids moléculaires.

L'essai 19 consiste à pré-traiter une "craie" au moyen d'un agent de pré-traitement, qui est un copolymère d'acide acrylique (45%), d'acide méthacrylique (40%) et d'acide itaconique (15%).

L'essai 20 consiste à pré-traiter une "craie" au moyen d'un agent de pré-traitement, qui est un acide polyacrylique de poids moléculaire moyen égal à 6 000.

Ces divers essais ont été exécutés selon les mêmes critères et dans les mêmes appareils que dans l'exemple 2.

Dans une première étape, dite étape de pré-traitement, les matériaux minéraux grossiers (carbonate de calcium de granulométrie comprise entre 5 et 43 microns) ont été introduits dans un malaxeur maintenu sous une agitation permanente.

Puis, selon l'invention, l'agent de pré-traitement a été ajouté sous la forme d'une solution aqueuse d'une dilution telle que la concentration souhaitée pour la suspension destinée au broyage soit atteinte.

Après un temps suffisamment long pour que le mélange constitué par les matériaux minéraux grossiers et l'agent de pré-traitement soit homogène, un agent alcalin de neutralisation a été introduit en une quantité telle que le pH du mélange atteigne une valeur comprise entre 9 et 10.

Au fur et à mesure que la neutralisation s'effectuait, le mélange est passé d'un état pâteux à un état très fluide.

Dans une deuxième étape, chaque suspension aqueuse ayant subi le pré-traitement selon l'invention a été placée dans le même appareil de broyage que dans l'exemple 1, avec la même quantité et le même type de corps broyants et a été traitée selon les mêmes critères expérimentaux que dans l'exemple 1 afin que les résultats obtenus puissent être comparés.

Chaque suspension aqueuse pré-traitée et soumise à l'opération de broyage avait une concentration de matériaux minéraux de 80% en poids.

Un agent de broyage appartenant à l'art antérieur était introduit dans chaque suspension à broyer selon les quantités indiquées dans le tableau IV ci-après, exprimées en pour cent en poids (sec/sec) par rapport à la masse de matériaux minéraux à broyer.

Tous les résultats obtenus sur les suspensions soumises au pré-traitement selon l'invention puis broyées sont consignés dans le tableau IV ci-après.

TABLEAU IV

| MATERIAUX MINERAUX | | | ESSAIS N° | 16 | 17 | 18 | 19 | 20 |
|---|---|---|---|---|---|---|---|---|
| | | | TYPE | Craie | Craie | Craie | Craie | Craie |
| | P R E T R A I T E M E N T | | Agent de pré-traitement — Type | Acide Poly acrylique | Acide Poly acrylique | Acide Poly acrylique | Copolymère acide | Acide Poly acrylique |
| | | | — Poids moléculaire | 1000 | 8000 | 20000 | 3000 | 6 000 |
| | | | — Consommation % sec/sec | 0,6 | 0,6 | 0,6 | 0,6 | 0,6 |
| | | | Agent de neutralisation — Type | Sodium | Sodium | Sodium | Sodium | Sodium |
| | | | — Consommation | 0,3 | 0,3 | 0,3 | 0,3 | 0,3 |
| | | | Suspension — pH | 9,6 | 9,6 | 9,7 | 9,7 | 9,7 |
| | | | — Concentration en poids | 80 | 80 | 80 | 80 | 80 |
| | | | — Viscosité Brookfield 20°C 100T/mn | 520 | 860 | 3360 | 350 | 720 |
| | B R O Y A G E | | Agent de broyage — Type | Poly acrylate | Poly acrylate | Poly acrylate | Poly acrylate | Poly acrylate |
| | | | — Poids moléculaire | 4000 | 4000 | 4000 | 4000 | 4000 |
| | | | — Agent de neutralisation | Sodium | Sodium | Sodium | Sodium | Sodium |
| | | | — Taux de neutralisation | 1 | 1 | 1 | 1 | 1 |
| | | | — Consommation % sec/sec | 0,6 | 0,6 | 0,6 | 0,6 | 0,6 |
| | | | Température de broyage °C | 65 | 65 | 65 | 65 | 65 |
| | | | Concentration de la suspension sortie broyage en % en poids | 80 | 80 | 80 | 80 | 80 |
| | | | Temps de broyage en mn | 7 | 5 | | 7 | 11 |
| S U S P E N S I O N S | A P R E S | B R O Y A G E | Viscosité Brookfield 20°C 100 T/mn — Après broyage | 2360 | 3150 | IMPOSSIBLE BROYAGE | 825 | 1200 |
| | | | — Après 24 h de repos | 5900 | 8600 | | 1000 | 1900 |
| | | | Granulométrie — en % inférieur à 2 µ | 64 | 55 | | 65 | 88 |
| | | | — en % inférieur à 1 µ | 39 | 33 | | 41 | 54 |

Le tableau IV confirme les conclusions de l'exemple 2 et apporte les précisions quant à l'intervalle des poids moléculaires revendiqués pour l'agent de pré-traitement.

Il apparaît en effet que, pour les poids moléculaires supérieurs à 8 000, l'agent de pré-traitement perd son efficacité puisqu'il devient impossible de broyer les suspensions aqueuses de matériaux minéraux grossiers préalablement conditionnés.

De même, il se révèle que, pour des poids moléculaires inférieurs à 1 000, l'efficacité de l'agent de pré-traitement devient très faible.

## Exemple 4

Cet exemple illustre l'application semi-industrielle de l'invention au domaine du conditionnement par l'agent de pré-traitement de matériaux minéraux grossiers destinés à des applications pigmentaires après avoir subi un broyage à une concentration en matière sèche de 80,5%.

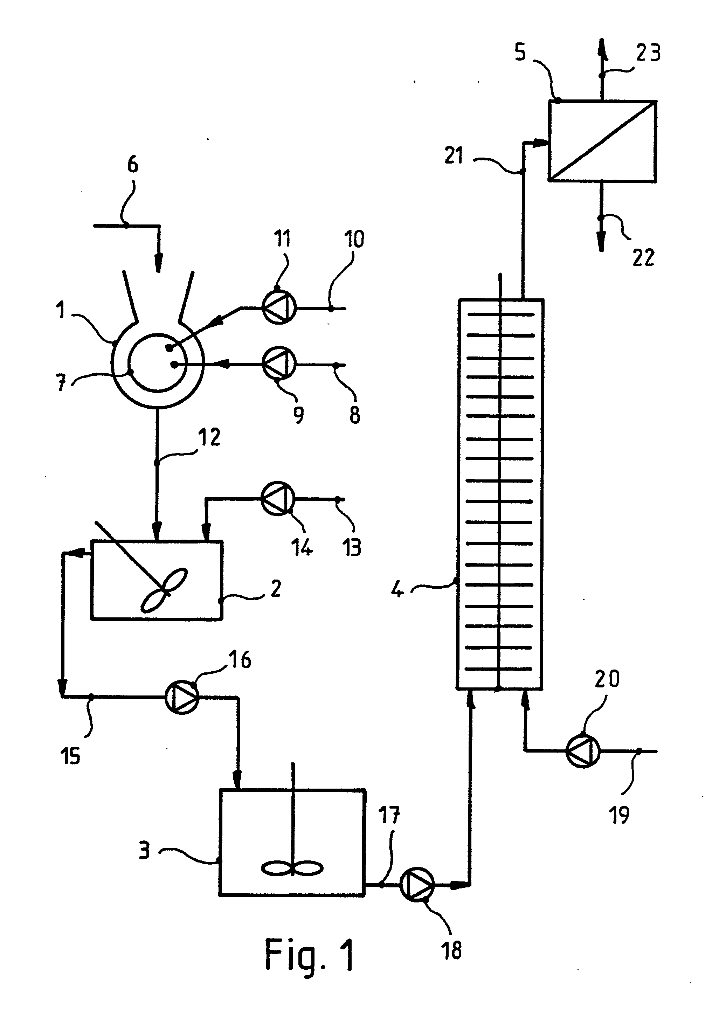

Dans ce but et selon la figure 1, on a utilisé une installation pilote comportant un broyeur (1) (type FORPLEX), un bac de délittage (2) muni d'une agitation, un bac tampon (3) maintenu sous agitation, un broyeur (4) à micro-éléments et une zone de séparation (5).

On a introduit en continu par (6) dans le broyeur (1) les matériaux minéraux grossiers provenant du gisement de craie (Omey - France) contenant 1,1% en poids d'argiles gonflantes et 22% en poids d'eau naturellement incluse, à raison de 300 kg par heure.

Le broyeur (1) était muni d'un rotor (7) et d'une grille à la sortie (non représentée) permettant une sélection granulométrique des matériaux inférieure à 43 microns.

Au cours du broyage en (1), on injectait par le circuit (8) muni d'une pompe (9) l'agent de pré-traitement, qui se présentait sous forme d'une solution aqueuse à 35% en poids. Dans le cas où la teneur en eau incluse dans le minerai est inférieure à la quantité nécessaire pour permettre l'opération de conditionnement, il est possible d'introduire dans le broyeur (1) par le circuit (10) et la pompe (11) une quantité d'eau nécessaire à une telle réalisation.

L'agent de pré-traitement était un acide polyacrylique de poids moléculaire moyen 4 000 déjà utilisé dans les essais 12 et 13.

Les matériaux minéraux grossiers intimement imprégnés de l'agent de pré-traitement se présentaient sous la forme d'une pâte très consistante ayant une concentration de 78% en poids et étaient conduits du broyeur (1) jusqu'au bac de délittage (2) par l'intermédiaire du moyen (12).

Les matériaux minéraux grossiers présents dans le bac (2) étaient alors soumis à une action de délittage pendant qu'était simultanément introduit par le circuit (13) muni de la pompe (14) un agent de neutralisation constitué par une solution d'hydroxyde de sodium (à concentration de 50% en poids) de manière que le pH dans ledit bac (2) soit maintenu à une valeur d'environ 9,5.

Il s'y formait alors une suspension très fluide des matériaux minéraux grossiers qui était facilement déplacée par le circuit (15) à l'aide de la pompe (16) dans le bac tampon (3) muni d'une agitation pour assurer une alimentation régulière du broyeur à micro-éléments (4) par le conduit (17) et la pompe (18).

Simultanément était introduit par le conduit (19) et la pompe (20) un agent de broyage en solution aqueuse déjà utilisé pour les essais 6 à 11.

Le broyeur à micro-éléments (4) du type SUSMEYER se composait d'une enveloppe externe cylindrique munie d'un moyen de refroidissement (non représenté), ayant une hauteur de 2 160 millimètres et un diamètre de 320 millimètres, d'impulseurs tournants ayant une vitesse périphérique tangentielle de 10 mètres par seconde.

Les micro-éléments de broyage étaient des billes de corindon ayant un diamètre de 1,0 à 1,6 millimètre, représentant une masse totale de 290 kg.

Le debit d'alimentation en suspension à soumettre au broyage était de 250 litres par heure.

L'intensité du courant consommé était de 86 ampères sous 380 volts triphasés.

La température de la suspension à l'entrée du broyeur (4) était de 16 ± 1° C et celle de la sortie était de 100° C.

A la sortie du broyeur à micro-éléments (21) se trouvait une sone de séparation (5) permettant le partage de la suspension pigmentaire selon la sortie (22) et des micro-éléments selon la sortie (23).

Trois essais (essais 21, 22 et 23) ont été effectués, chacun correspondant à des modes opératoires différents.

L'essai 21 a consisté à conditionner de la craie (Omey - France) au moyen de l'agent de pré-traitement (acide polyacrylique de poids moléculaire moyen 4 000), puis à neutraliser par un agent alcalin (hydroxyde de sodium) jusqu'à un pH de 9,7, cette neutralisation conduisant à une suspension fluide.

La suspension fluide a été soumise à broyage sans addition de l'agent de broyage habituellement utilisé.

L'essai 22 a consisté à conditionner la même craie d'Omey par le même agent de pré-traitement que dans l'essai 21 en quantité plus faible puis, après neutralisation et obtention d'une suspension fluide, à soumettre ladite suspension à un broyage en présence d'un agent de broyage identique à celui utilisé dans les essais 6 à 11.

L'essai 23 a consisté à conditionner la même craie (Omey - France) selon le même protocole que celui pratiqué dans l'essai 21, complété par l'introduction au moment du broyage du même agent de broyage et selon les mêmes quantités que l'essai 22.

Toutes les caractéristiques opératoires et les résultats acquis ont été rassemblés dans le tableau V ci-après.

## TABLEAU V

| MATERIAUX MINERAUX | | ESSAIS N° | 21 | 22 | 23 |
|---|---|---|---|---|---|
| | | TYPE | Craie | Craie | Craie |
| P R E T R A I T E M E N T | | Agent de pré-traitement | | | |
| | | – Type | Acide Poly acrylique | Acide Poly acrylique | Acide Poly acrylique |
| | | – Poids moléculaire | 4000 | 4000 | 4000 |
| | | – Consommation % sec/sec | 0,66 | 0,4 | 0,66 |
| | | Agent de neutralisation | | | |
| | | – Type | Sodium | Sodium | Sodium |
| | | – Consommation | 0,33 | 0,2 | 0,33 |
| | | Suspension | | | |
| | | – pH | 9,7 | 9,5 | 9,6 |
| | | – Concentration en poids | 78 | 78 | 78 |
| | | – Viscosité Brookfield 20°C 100T/mn | 700 | 380 | 690 |
| B R O Y A G E | | Agent de broyage | | | |
| | | – Type | — | Poly acrylate | Poly acrylate |
| | | – Poids moléculaire | — | 4000 | 4000 |
| | | – Agent de neutralisation | — | Na+/Ca2+ | Na+/Ca2+ |
| | | – Taux de neutralisation | — | 0,7/0,3 | 0,7/0,3 |
| | | – Consommation % sec/sec | — | 0,4 | 0,4 |
| | | Température de broyage °C | 100 | 100 | 100 |
| | | Concentration de la suspension sortie broyage en % en poids | 80 | 80,5 | 80 |
| SUSPENSIONS | APRES BROYAGE | Viscosité Brookfield 20°C 100 T/mn | | | |
| | | – Après broyage | 2000 | 900 | 850 |
| | | – Après 24 h de repos | ∞ | 640 | 600 |
| | | Granulométrie | | | |
| | | – en % inférieur à 2 μ | 90 | 89 | 89 |
| | | – en % inférieur à 1 μ | 55 | 55 | 54 |

Le tableau V révèle et confirme la nécessité d'effectuer le conditionnement de matériaux minéraux grossiers par l'agent de pré-traitement selon l'invention et d'introduire lors du broyage au sein de la suspension résultant du conditionnement l'habituel agent de broyage bien connu de l'homme de l'art.

Ainsi, on obtient des suspensions affinées pigmentaires dépassant 80% en poids et d'une rhéologie particulièrement favorable.

A titre de comparaison avec l'art antérieur, on a réalisé dans le même appareillage et selon les mêmes protocoles opératoires de broyage quatre essais (essais 24 à 27) à partir de la même craie d'Omey, qui n'a pas été conditionnée par l'agent de pré-traitement.

Toutes les caractéristiques opératoires et les résultats acquis pour chacun de ces essais ont été regroupés dans le tableau VI ci-après.

## TABLEAU VI

| MATERIAUX MINERAUX | | | ESSAIS N° | 24 | 25 | 26 | 27 |
|---|---|---|---|---|---|---|---|
| | | | TYPE | Craie | Craie | Craie | Craie |
| | B R O Y A G E | | Suspension | | | | |
| | | | – pH | 9,4 | 9,5 | 9,4 | 9,3 |
| | | | – Concentration en poids | 73,5 | 76 | 76 | 77 |
| | | | – Viscosité Brookfield 20°C 100T/mn | 250 | 900 | 900 | 1500 |
| | | | Agent de broyage | | | | |
| | | | – Type | Poly acrylate | Poly acrylate | Poly acrylate | Poly acrylate |
| | | | – Poids moléculaire | 4000 | 4000 | 4000 | 4000 |
| | | | – Agent de neutralisation | Na+/Ca2+ | Na+/Ca2+ | Na+/Ca2+ | Na+/Ca2+ |
| | | | – Taux de neutralisation | 0,7/0,3 | 0,7/0,3 | 0,7/0,3 | 0,7/0,3 |
| | | | – Consommation % sec/sec | 0,6 | 0,8 | 1 | 1,1 |
| | | | Température de broyage °C | 100 | 100 | 100 | 100 |
| | | | Concentration de la suspension sortie broyage en % en poids | 75 | 76 | 78 | 80 |
| S U S P E N S I O N S | A P R E S | B R O Y A G E | Viscosité Brookfield 20°C 100 T/mn | | | | |
| | | | – Après broyage | 400 | 850 | 4000 | 9000 |
| | | | – Après 24 h de repos | 400 | 2400 | 10000 | ∞ |
| | | | Granulométrie | | | | |
| | | | – en % inférieur à 2 µ | 89 | 89 | 91 | 75 |
| | | | – en % inférieur à 1 µ | 54 | 53 | 57 | 45 |

Par comparaison avec les résultats du tableau V, le tableau VI relatif à l'art antérieur confirme l'absolue nécessité de conditionner par l'agent de pré-traitement les matériaux minéraux grossiers destinés à être affinés et comportant comme impuretés des argiles gonflantes, pour produire des suspensions aqueuses affinées pigmentaires hautement concentrées et de caractéristiques rhéologiques très favorables.

En dehors de tout conditionnement au moyen de l'agent de pré-traitement, il se confirme l'impossibilité de produire des suspensions pigmentaires utilisables ayant une concentration supérieure à 76%.

Pour illustrer d'une manière comparative avec l'art antérieur les bons résultats acquis par la mise en oeuvre selon l'invention de l'agent de pré-traitement pour la préparation d'une suspension aqueuse pigmentaire destinée au couchage du papier, on a réalisé deux compositions de couchage, de même formule, contenant en parties en poids sec :

- **Matière pigmentaire**      100

     **CaCO₃**

- **Liant**      10,5

     **ACRONAL S 360 D commercialisé par BASF**

- **Carboxyméthylcellulose (C.M.C.)**      0,5

Ces deux compositions de couchage, formulées à partir de suspensions pigmentaires résultant des essais 22 (invention) et 24 (art antérieur) sont exprimées dans le tableau ci-après.

| | concentration en en % en poids | formule selon l'invention | formule selon l'art antérieur |
|---|---|---|---|
| suspension issue de l'essai 22 | 80,5 | 124,2 | |
| suspension issue de l'essai 24 | 75,0 | | 133,3 |
| liant | 50,0 | 21,0 | 21,0 |
| C.M.C. | 100,0 | 0,5 | 0,5 |
| total | | 145,7 | 154,8 |
| extrait sec | | 76,1 | 71,7 |

Les rhéologies de ces deux compositions de couchage ont été mesurées à l'aide d'un viscosimètre Brookfield, module 5, et ont donné :

| | formule selon l'invention | formule selon l'art antérieur |
|---|---|---|
| à 10 T/mn | 14 400 | 15 200 |
| à 100 T/mn | 2 640 | 2 480 |

18

Ces deux formules ont été couchées sur une coucheuse pilote type DIXON d'une largeur de 250 mm, équipée d'un poste de dépôt à lame traînante.

Le séchage a été réalisé avec un séchoir à infra-rouges suivi d'un séchoir à air tangenciel (Air-Foil de BACHOFEN et MEYER).

Afin d'obtenir un papier couché une face avec un dépôt de 15 ± 1 g/m², on a pu sécher aux vitesses suivantes :

– 120 m/minute pour la formule selon l'invention,
– 85 m/minute pour la formule selon l'art antérieur.

Ainsi, on a pu obtenir des feuilles de papier couché au moyen de la formule selon l'invention qui, avant calandrage, présentaient un aspect de surface plus régulier et plus brillant que celles préparées au moyen de la formule selon l'art antérieur.

## Revendications

1. Procédé de production d'une suspension affinée pigmentaire de concentration au moins égale à 75% en poids et de viscosité faible et stable dans le temps, à partir d'un matériau minéral grossier renfermant de l'argile gonflante viscosifiante, caractérisé en ce que, avant l'affinage en milieu aqueux par attrition ou broyage, on effectue un pré-traitement comprenant les étapes consistant à :

a) réaliser sous agitation une imprégnation quasiment à sec du matériau minéral grossier au moyen de 0,05 à 1,0% en poids de matière active par rapport au poids sec du matériau grossier à pré-traiter d'un agent de pré-traitement formé de un ou plusieurs polymère(s) et/ou copolymère(s) acide(s), éventuellement partiellement neutralisé(s) à un taux de 0,4 au plus, par un agent neutralisant comportant au moins un monomère éthylénique carboxylé et présentant un poids moléculaire moyen de 1000 à 8000,

b) introduire éventuellement dans le milieu imprégné obtenu à l'étape (a) une petite quantité d'eau représentant au plus 25% en poids par rapport à la masse à l'état sec du matériau minéral grossier,

c) malaxer le milieu d'imprégnation jusqu'à l'obtention d'un état de pâte visqueuse et/ou d'un état de particules granulaires,

d) traiter le milieu obtenu à l'étape (c) par une solution aqueuse d'un hydroxyde jusqu'à l'obtention d'un pH d'environ 9,

e) recueillir la suspension aqueuse fluide ainsi formée pour l'utiliser dans l'étape d'affinage.

2. Procédé selon la revendication 1, caractérisé en ce que l'agent de pré-traitement ou l'un de ses constituants résulte de la polymérisation ou de la copolymérisation d'au moins un monomère éthylénique carboxylé choisi dans le groupe constitué par l'acide acrylique et/ou méthacrylique, itaconique, crotonique, fumarique, anhydride maléique ou encore isocrotonique, aconitique, mésaconique, sinapique, undécylénique, angélique, hydroxyacrylique.

3. Procédé selon la revendication 1, caractérisé en ce que l'agent de pré-traitement ou l'un de ses constituants résulte de la copolymérisation d'au moins un monomère éthylénique carboxylé avec au moins un monomère choisi dans le groupe constitué par l'acroléine, l'acrylamide et ses substitués, l'acrylonitrile, les esters des acides acryliques et méthacryliques et en particulier le méthacrylate de diméthylaminoéthyle, les imidazoles, la vinylpyrolidone, le vinylcaprolactame, l'éthylène, le propylène, l'isobutylène, le diisobutylène, l'acétate de vinyle, le styrène et ses substitués, l'alphaméthylstyrène, la méthylvinylcétone, les chlorures de vinyle, les monomères hydroxylés, plus spécialement les acrylates et les méthacrylates d'éthylène glycol, de propylène glycol ainsi que leurs dérivés phosphatés, sulfatés, sulfonés ou nitrés.

4. Procédé selon l'une des revendications 1 à 3, caractérisé en ce que l'agent de pré-traitement présente un poids moléculaire moyen de 3000 à 6000.

5. Procédé selon l'une des revendications 1 à 4, caractérisé en ce que le taux de neutralisation de l'agent de pré-traitement est de 0,2 au plus.

6. Procédé selon l'une des revendications 1 à 5, caractérisé en ce que l'agent neutralisant est choisi dans le groupe constitué par les métaux alcalins et/ou alcalino-terreux ou assimilés, de préférence parmi le sodium, le potassium, le calcium et le magnésium.

7. Procédé selon l'une des revendications 1 à 6, caractérisé en ce que la suspension aqueuse fluide résultant de l'étape (e) a une concentration en matière sèche d'au moins 75%, de préférence comprise entre 75% et 85% en poids.

8. Procédé selon l'une des revendications 1 à 7, caractérisé en ce que la suspension aqueuse fluide résultant de l'étape (e) est ensuite soumise à un broyage ou une attrition en présence d'un agent de broyage de type connu.

9. Procédé selon l'une des revendications 1 à 8, caractérisé en ce que le matériau minéral grossier est choisi dans le groupe constitué par les carbonate, hydroxyde, sulfate et silicate de calcium, le dioxyde de titane, le talc, les kaolins, les barbotines de céramiques, les minerais argileux dont un élément métallique est à valoriser par hydro-métallurgie.

10. Application du procédé selon l'une des revendications 1 à 9 au domaine du couchage sur papier.

## Patentansprüche

1. Verfahren zur Herstellung einer zeitstabilen, raffinierten Pigmentsuspension mit einer wenigstens 75gew.%igen Konzentration und niedriger Viskosität, ausgehend von einem viskositätserhöhenden Quellton enthaltenden grobkörnigen mineralischen Material, dadurch gekennzeichnet, daß man vor der Raffination durch Verreiben oder Vermahlen in wäßrigem Milieu eine Vorbehandlung durchführt, welche die folgenden Stufen umfaßt:

a) Durchführung einer gleichsam trockenen Durchtränkung unter Rühren des grobkörnigen mineralischen Materials mit 0,05 bis 1,0 Gew.% aktivem Stoff, bezogen auf das Trockengewicht des grobkörnigen Materials, das mit einem Vorbehandlungsmittel vorzubehandeln ist, welches aus einem oder mehreren sauren Polymeren und/oder Copolymeren besteht, das (die) gegebenenfalls durch ein Neutralisationsmittel bis zu einem Grad von höchstens 0,4 teilweise neutralisiert ist (sind), wenigstens ein carboxyliertes ethylenisches Monomeres enthält und ein mittleres Molekulargewicht von 1.000 bis 8.000 aufweist,

b) gegebenenfalls Einbringen einer geringen Wassermenge von höchstens 25 Gew.%, bezogen auf die Trockenmasse des grobkörnigen mineralischen Materials, in das in Stufe (a) erhaltene durchtränkte Medium,

c) Kneten des durchtränkten Mediums bis zum Erhalten des Zustands einer viskosen Paste und/oder körniger Partikel,

d) Behandlung des in Stufe (c) erhaltenen Mediums mit einer wäßrigen Hydroxidlösung bis zur Einstellung eines pH-Werts von etwa 9 und

e) Gewinnung der so hergestellten fluiden wäßrigen Suspension zur Verwendung in der Raffinationsstufe.

2. Verfahren nach Anspruch 1, dadurch gekennzeichnet, daß das Vorbehandlungsmittel oder eines seiner Bestandteile aus der Polymerisation oder Copolymerisation wenigstens eines carboxylierten ethylenischen Monomeren resultiert, das aus der Gruppe ausgewählt ist, die aus Acryl- und/oder Methacrylsäure, Itacon-, Croton- und Fumarsäure, Maleinsäureanhydrid oder auch Isocroton-, Akonit-, Mesacon-, Sinapin-, Undecylen-, Angelica- und Hydroxyacrylsäure besteht.

3. Verfahren nach Anspruch 1, dadurch gekennzeichnet, daß das Vorbehandlungsmittel oder eines seiner Bestandteile aus der Copolymerisation wenigstens eines carboxylierten ethylenischen Monomeren mit wenigstens einem Monomeren resultiert, das aus der Gruppe ausgewählt ist, die aus Acrolein, Acrylamid und seinen Substitutionsprodukten, Acrylnitril, den Estern der Acryl- und Methacrylsäure und insbesondere Dimethylaminoethylmethacrylat, Imidazolen, Vinylpyrrolidon, Vinylcaprolactam, Ethylen, Propylen, Isobutylen, Diisobutylen, Vinylacetat, Styrol und seinen Substitutionsprodukten, alpha-Methylstyrol, Methylvinylketon, Vinylchloriden und hydroxylierten Monomeren, insbesondere den Acrylaten und Methacrylaten des Ethylen- und Propylenglykols sowie ihren phosphatierten, sulfatierten, sulfonierten oder nitrierten Derivaten besteht.

4. Verfahren nach einem der Ansprüche 1 bis 3, dadurch gekennzeichnet, daß das Vorbehandlungsmittel ein mittleres Molekulargewicht von 3.000 bis 6.000 aufweist.

5. Verfahren nach einem der Ansprüche 1 bis 4, dadurch gekennzeichnet, daß der Neutralisationsgrad des Vorbehandlungsmittels höchstens 0,2 beträgt.

6. Verfahren nach einem der Ansprüche 1 bis 5, dadurch gekennzeichnet, daß das Neutralisierungsmittel aus der aus den Alkali- und/oder Erdalkali- oder gleichwertigen Metallen bestehenden Gruppe, vorzugsweise aus Natrium, Kalium, Calcium und Magnesium ausgewählt ist.

7. Verfahren nach einem der Ansprüche 1 bis 6, dadurch gekennzeichnet, daß die in Stufe (e) erhaltene fluide wäßrige Suspension einen Trockenmassegehalt von wenigstens 75 und vorzugsweise zwischen 75 und 85 Gew.% hat.

8. Verfahren nach einem der Ansprüche 1 bis 7, dadurch gekennzeichnet, daß die in Stufe (e) erhaltene fluide wäßrige Suspension anschließend einem Vermahlen oder Verreiben in Gegenwart eines Mahlmittels bekannten Typs unterzogen wird.

9. Verfahren nach einem der Ansprüche 1 bis 8, dadurch gekennzeichnet, daß das grobkörnige mineralische Material aus der Gruppe ausgewählt ist, die aus Calciumcarbonat, -hydroxid, -sulfat und -silicat, Titandioxid, Talkum, Kaolinen, keramischen Tonen und Tonmineralien besteht, deren Metallelement durch Hydrometallurgie verarbeitbar ist.

10. Verwendung des Verfahrens nach einem der Ansprüche 1 bis 9 auf dem Gebiet der Papierbeschichtung.

## Claims

1. Process for producing a refined pigmenting suspension having a concentration of at least 75% by weight and a low viscosity which is stable over time from a coarse mineral material containing viscosity-increasing swelling clay, characterised in that, prior to refinement in an aqueous medium by attrition or crushing, there is effected a pretreatment comprising the stages consisting of:

a) carrying out, with stirring, substantially dry impregnation of the coarse mineral material using 0.05 to 1.0% by weight of active ingredient based on the dry weight of the coarse material to be pretreated of a pretreatment agent formed by one or more acidic polymer(s) and/or copolymer(s), optionally partially neutralised to a rate of at most 0.4 by a neutralising agent containing at least one carboxylated ethylene monomer and having an average molecular weight of 1,000 to 8,000,

b) optionally introducing into the impregnated medium obtained in stage (a) a small quantity of water representing at most 25% by weight, based on the mass in the dry state of the coarse mineral material,

c) kneading the impregnation medium until a state of viscous paste and/or a state of granular particles are/is obtained,

d) treating the medium obtained in stage (c) with an aqueous solution of a hydroxide until a pH of about 9 is obtained,

e) collecting the fluid aqueous suspension formed in this way for use in the refining stage.

2. Process according to claim 1, characterised in that the pretreatment agent or a constituent thereof results from the polymerisation or copolymerisation of at least one carboxylated ethylene monomer selected from the group consisting of acrylic and/or methacrylic, itaconic, crotonic, fumaric acid, maleic anhydride or again isocrotonic, aconitic, mesaconic, sinapic, undecylenic, angelic, hydroxyacrylic acid.

3. Process according to claim 1, characterised in that the pretreatment agent or a constituent thereof results from the copolymerisation of at least one carboxylated ethylene monomer with at least one monomer selected from the group consisting of acrolein, acrylamide and substitutes thereof, acrylonitrile, acrylic and methacrylic acid esters and, in particular, dimethylaminoethyl methacrylate, imidazoles, vinylpyrolidone, vinylcaprolactam, ethylene, propylene, isobutylene, diisobutylene, vinyl acetate, styrene and substitutes thereof, alphamethylstyrene, methylvinylketone, vinyl chlorides, hydroxylated monomers, more specifically the acrylates and methacrylates of ethylene glycol, propylene glycol as well as the phosphated, sulphated, sulphonated, or nitrated derivatives thereof.

4. Process according to one of claims 1 to 3, characterised in that the pretreatment agent has an average molecular weight of 3000 to 6000.

5. Process according to one of claims 1 to 4, characterised in that the rate of neutralisation of the pretreatment agent is at most 0.2.

6. Process according to one of claims 1 to 5, characterised in that the neutralising agent is selected from the group consisting of alkali and/or alkaline-earth or assimilated metals, preferably from among sodium, potassium, calcium and magnesium.

7. Process according to one of claims 1 to 6, characterised in that the fluid aqueous suspension resulting from stage (e) has a concentration of dry ingredients of at least 75%, preferably of between 75% and 85% by weight.

8. Process according to one of claims 1 to 7, characterised in that the fluid aqueous suspension resulting from stage (e) is then subjected to crushing or attrition in the presence of a crushing agent of a known type.

9. Process according to one of claims 1 to 8, characterised in that the coarse mineral material is selected from the group consisting of calcium carbonate, hydroxide, sulphate and silicate, titanium dioxide, talcum, kaolins, ceramic slips, clayey ores of which a metallic element is to be upgraded by hydrometallurgy.

10. Application of the process according to one of claims 1 to 9 to the paper coating sphere.

**Fig. 1**